(19) Europäisches Patentamt
European Patent Office
Office européen des brevets

(11) **EP 1 685 642 B1**

(12) **EUROPÄISCHE PATENTSCHRIFT**

(45) Veröffentlichungstag und Bekanntmachung des Hinweises auf die Patenterteilung:
**09.07.2008  Patentblatt 2008/28**

(21) Anmeldenummer: **04803170.2**

(22) Anmeldetag: **18.11.2004**

(51) Int Cl.:
**H02K 51/00** *(2006.01)*

(86) Internationale Anmeldenummer:
**PCT/EP2004/013085**

(87) Internationale Veröffentlichungsnummer:
**WO 2005/050824 (02.06.2005 Gazette 2005/22)**

(54) **STUFENLOS SCHALTBARES, MAGNETODYNAMISCHES GETRIEBE**

CONTINUOUSLY CONTROLLABLE MAGNETODYNAMIC GEAR

TRANSMISSION MAGNETODYNAMIQUE A REGLAGE CONTINU

(84) Benannte Vertragsstaaten:
**FR GB IT**

(30) Priorität: **21.11.2003   DE 10354604**

(43) Veröffentlichungstag der Anmeldung:
**02.08.2006   Patentblatt 2006/31**

(73) Patentinhaber: **GESELLSCHAFT FÜR AUFLADETECHNIK UND SPINDELBAU MBH 88142 Wasserburg/B. (DE)**

(72) Erfinder:
• **HUBER, Gerhard 88142 Wasserburg/B. (DE)**

• **BAUKNECHT, Günter 89073 Ulm (DE)**

(74) Vertreter: **Riebling, Peter Patentanwalt Postfach 31 60 88113 Lindau (DE)**

(56) Entgegenhaltungen:
**EP-A- 1 003 271          EP-A- 1 111 762**
**EP-A- 1 154 551          WO-A-03/075437**
**US-A- 4 532 447**

**Beschreibung**

Die Erfindung betrifft ein stufenlos schaltbares magnetodynamisches Getriebe.

Ein lediglich in Stufen schaltbares, magnetodynamisches Getriebe ist beispielsweise mit dem Gegenstand der DE 19604710 A1 und dem Zitat: Peter Graf von Ingelheim: "Mechanik ade" in "Das Industriemagazin" 19/2002, Seite 42 bis 45 bekannt geworden.

Bei diesem grundsätzlich in Stufen schaltbaren magnetodynamischen Getriebe soll eine stufenlose Schaltung durch einen nachgeschalteten Frequenzwandler erreicht werden. Die genannte Druckschrift verwendet im Prinzip zwei Motoren, die wahlweise als Motor-Generator-Aggregat betrieben werden können und miteinander elektrisch verschaltet sind.

Dank der Verwendung zweier derartiger Aggregate besteht jedoch der Nachteil, dass relativ große Kupfermengen für die Wicklungen benötigt werden, durch die ein größerer elektrischer Verlust bei der Drehmomentübertragung auftritt.

In der EP 1 154 551 A2 ist eine asynchron laufende Induktionsmaschine gezeigt. Dieser 3-Phasen-Generator, der mit einem 3-Phasen-Motor gekoppelt ist, überträgt, die Systemleistung im Hauptstrompfad ausschließlich durch Strom zwischen dem Generator und dem Motor, wodurch großdimensionierte Schaltungsbauteile notwendig sind.

Der Erfindung liegt deshalb die Aufgabe zugrunde, ein stufenlos regelbares magnetodynamisches Getriebe der eingangs genannten Art so weiterzubilden, dass bei wesentlich geringeren Kupferanteilen geringere elektrische Verluste entstehen und die Anordnung kleiner und kompakter baut.

Zur Lösung der gestellten Aufgabe ist die Erfindung durch die technische Lehre des Anspruches 1 gekennzeichnet.

Vorgeschlagen wird auch ein Verfahren zum Betrieb eines magnetodynamischen Getriebes nach einem der Ansprüche 1 bis 6.

Kern der Erfindung ist es, durch die Vermeidung von hohen Kupferanteilen im Hauptstrompfad die elektrischen Verluste wesentlich zu minimieren.

Zu diesem Zweck sieht die Erfindung ein magnetodynamisches Getriebe vor, bei dem ein innenumlaufender Rotor mit Magneten bestückt ist und bei Drehung ein vielpoliges, sich mitdrehendes Magnetfeld im umgebenden Raum ausbildet. Dieser umlaufende Rotor dient als Aktionsrad. Der Rotor als Reaktionsrad ist hierbei von einem Feldkonzentrator umgeben. Dieser besteht aus magnetisch leitfähigen, der Polzahl des Innenrotors entsprechende Polschuhen.

Der Feldkonzentrator ist in der hydrodynamischen Analogie dem Leitapparat gleichzusetzen.

Dieses System ist nun vom Abtriebsrotor, dem Reaktionsrad, umgeben. Die Nuten sind mit Leiterschleifen versehen, die in diesem Fall als Sechsfachgruppierung die gleiche Polzahl aufweisen, wie der Stator. Diese Leiterschleifen können von einer entsprechenden Elektronik sequentiell kurzgeschlossen werden.

Im Gegensatz zu einer Asynchron- oder Synchronanordnung, bei der Wechsel-oder Drehströme im Hauptstrompfad vorhanden sind, wird bei der Erfindung durch das Prinzip der kurzgeschlossenen Wicklungen im Reaktionsrad ein wesentlich geringerer Kupferanteil benötigt.

Allgemein soll für die vorliegenden Beschreibung gelten, dass Antriebs- und Abtriebsseite gegeneinander austauschbar sind. Die Erfindung betrifft also auch das Analogon, dass die Antriebsseite mit der Abtriebsseite vertauscht ist und umgekehrt. In diesem Lichte sind auch die Begriffe von "Antriebsrotor" und "Abtriebsrotor" zu verstehen. Das vorliegende Getriebe besteht grundsätzlich aus drei Teilen, nämlich aus einem Antriebsteil, einem Abtriebsteil und einem feststehenden Teil. Die genannten drei Teile sind räumlich gegeneinander austauschbar und die später in der bevorzugten Ausführungsform beschriebene Ausführung ist ohne Weiteres gegen andere räumlich analoge Ausführungsformen ersetzbar.

Weil die Wicklungen als Kurzschlusswicklungen (oder auch als Kurzschlussstäbe) angesehen werden können, bedarf es nur relativ klein dimensionierter Schaltelemente, um diese Schaltvorgänge auszuführen. Dies ist ein wesentlicher Unterschied zum Stand der Technik, bei dem hochdimensionierte und relativ teure Schaltelemente benötigt wurden.

Das gewünschte Kurzschließen der einzelnen Wicklungen wird hierbei elektronisch bewerkstelligt.

Im Folgenden wird die Erfindung anhand von lediglich einem Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: schematisiert einen Querschnitt durch ein magnetodynamisches Getriebe nach der Erfindung in seinem prinzipiellen Aufbau;

Figur 2: ein Momentenverlauf eines Poles im Antriebsrotor;

Figur 3: einen Momentenverlauf im Abtrieb;

Figur 4: ein Momentenverlauf bei stillstehendem Abtrieb;

Figur 5: Verluste über die Antriebsdrehzahl aufgezeichnet;

Figur 6: Darstellung der minimalen und maximalen Wandlungslinie;

Figur 7: Darstellung der phasenverschobenen Polmomente;

Figur 8: die Einzel- und Sumnienwelligkeit als Funktion des Polwinkels;

Figur 9: schematisiert den Aufbau eines Polrades aus einzelnen Polschuhen;

Figur 10: der prinzipielle Aufbau eines Feldkonzentrators;

Figur 11: Entstehung einer Kraftwirkung im Abtriebsrotor durch Induktion eines Gegenstromes in Kurzschlussschleife;

Figur 12: die Wirkungskette nach der Erfindung;

Figur 13: das zugehörige Leistungsflussdiagramm;

Figur 14: den prinzipiellen Aufbau eines magnetodynamischen Getriebes;

Figur 15: die Darstellung des optimalen Momentes als Funktion der Drehzahl;

Figur 16: den Verbrauch eines Kraftfahrzeuges in Gramm/kWh über die Drehzahl aufgetragen;

Figur 17: den Wirkungsgrad bei Volllast über der Kardanwellendrehzahl;

Figur 18: Schnitt durch ein magnetodynamisches Getriebe nach der Erfindung.

Die Grundgleichungen der Wechselwirkung zwischen Mechanik, Elektrizität und Magnetismus lauten:

$$M \sim \Theta / w \sim I \quad (1)$$

und

$$n \sim d\Phi/dt \sim U \quad (2)$$

Damit gilt:

$$P = U * I \sim d\Phi/dt * \Theta / w \sim M * n \quad (3)$$

Die 3 Grundgleichungen sind bei Vernachlässigung von Verlusten in beiden Richtungen lesbar und besagen, dass ein beliebiges Produkt M1*n1 am Antrieb, und ein Produkt aus M2 * n2 am Abtrieb den gleichen Wert haben muss. Damit jedoch eine Drehmomentwandlung stattfinden kann, muss ein solcher Wandler aus drei Grundelementen aufgebaut sein.

Analog zum hydraulischen Wandler, mit den Elementen:

Pumpe, Leitapparat und Turbine

sind dies in einem magnetischen System die Elemente:

Aktionsrad, Feldkonzentrator und Reaktionsrad.

Um die Wirkungskette im ersten Ansatz verständlicher zu machen, beruht die Darstellung im folgenden auf der Anordnung:

Aktionsrad = Antriebsrotor (7)
Feldkonzentrator (4)
Reaktionsrad = Abtriebsrotor (2)

Bei einer solchen Anordnung wäre ein rotierendes Teil bewickelt und muss für Anlasser, Booster und Rekuperation mit Energie versorgt werden, bzw. liefert Energie. Der feststehende Teil befindet sich zwischen den Rotoren.

Das ist sowohl aus mechanisch konstruktiver als auch aus elektrischer Sicht eine unpraktische Lösung.

Weil jedoch Kraftwirkungen stets Wechselwirkungen sind, ist es grundsätzlich möglich, eine andere Anordnung zu wählen.

Der Feldkonzentrator wird drehbar angeordnet und das Reaktionsrad steht fest.

Der Antrieb und der Abtrieb stellen dann ein koaxiales System dar, das von einem feststehenden Teil, das auch sämtliche elektrischen Verbindungen aufweist, umgeben ist.

In der Hydrodynamik wird analog dazu beim Föttingerwandler von der klassischen Anordnung:

Pumpe - Leitapparat - Turbine

auch auf die Anordnung:

Pumpe - Turbine - Leitapparat übergegangen.

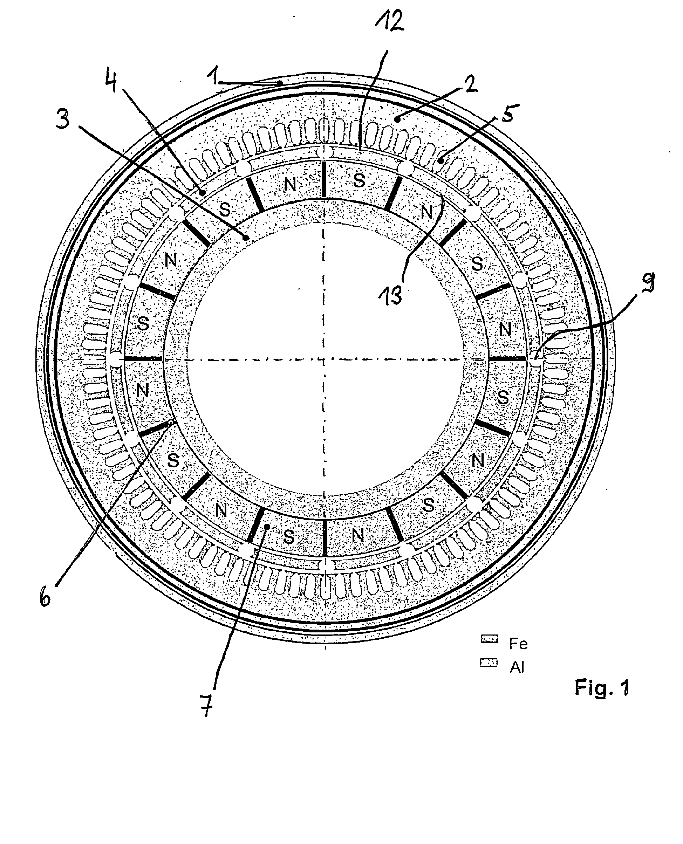

In Fig. 1 ist ein Querschnitt eines magnetodynamischen Wandlers dargestellt, bei dem ein innen umlaufender Rotor mit Dauermagneten bestückt ist, und bei Drehung ein vielpoliges, sich mitdrehendes Magnetfeld im umgebenden Raum ausbildet. Dies ist das Aktionsrad. In der hydrodynamischen Analogie der Pumpe zuzuordnen.

Dieser Rotor ist vom Feldkonzentrator umgeben, das sind magnetisch leitfähige, zunächst der Polzahl des Innenrotors entsprechende Polschuhe.

Ein Betrachter von außen wird, beim sich drehenden Innenrotor, nur noch ein konzentriertes Wechselfeld erkennen. Die Richtungsinformation aus der Antriebsseite ist somit "verloren" gegangen. Das ist eine wichtige Voraussetzung, um eine Kraftabstützung zu erreichen. Funktional ist dies der Feldkonzentrator. In der hydrodynamischen Analogie, dem Leitapparat gleichzusetzen.

Dieses System ist nun vom Abtriebsrotor, dem Reaktionsrad umgeben. Die Nuten sind mit Wicklungen versehen, die in diesem Fall als Sechsfachgruppierung die gleiche Polzahl aufweisen, wie der Stator. Die Wicklungen können von einer entsprechenden Elektronik sequentiell kurzgeschlossen werden.

Die Figur 1 zeigt schematisiert, dass in einem feststehenden Gehäuse 1 ein Stator 2 angeordnet ist, der radial einwärts gerichtete Wicklungsnuten 5 aufweist.

Radial einwärts des Stators 2 ist durch einen sekundären Luftspalt 12 getrennt ein Feldkonzentrator 4 (Leitrad) mit gleichmäßig am Umfang verteilten Stäben 9 angeordnet.

Radial einwärts vom Feldkonzentrator 4 und durch einen weiteren primären Luftspalt 13 getrennt, ist ein Antriebsrotor 7 angeordnet, der an seinem Umfang gleichmäßig verteilte und abwechselnd polarisierte Magnete 6 trägt. Der Antriebsrotor 7 ist auf einem Innenrotor 3 drehfest befestigt. Der Antrieb erfolgt beispielsweise über den Innenrotor 3, der damit das Antriebsdrehmoment über den Antriebsrotor 7 auf den Feldkonzentrator 4 überträgt, der drehfest mit dem Abtrieb verbunden ist.

Im Sinne der vorstehend gegebenen, allgemeinen Beschreibung können jedoch der Antrieb und der Abtrieb auch gegeneinander vertauscht sein.

Ebenso ist es möglich, dass der Feldkonzentrator 4 stillsteht und der Stator 2 umläuft und hierbei als Abtrieb funktioniert.

Angenommen, der Abtrieb steht still und die Wicklungen sind alle kurzgeschlossen, wird bei sich drehendem Antrieb das über die Polschuhe in den Abtrieb verlaufende magnetische Wechselfeld, eine Spannung induzieren, die sich wegen des Kurzschlusses jedoch nach außen nicht ausbilden kann. Dafür fließt in den Spulen ein Strom I, der ein magnetisches Feld nach sich zieht.

Nach Lenz, ist dieses Reaktionsfeld stets dem Quellenfeld entgegen gerichtet (Lenz'sche Hemmungsregel). In der Wirkung ist dies dasselbe, als ob sich zwei gleiche Magnetpole zu nähern versuchen. Im Antriebsrad entsteht eine Kraft, die das Polrad daran hindern will, mit den Polschuhen zur Deckung zu kommen. Ist der Antrieb in der Lage, die Deckung zu erzwingen, wird nach dem Überlaufen des Deckungspunktes die Kraftwirkung umgekehrt, und der Antrieb darin unterstützt, sich vom Pol des Polschuhs zu entfernen.

Alternativ können auch die Spulen im Reaktionsrad aus dem Feldbereich entfernt werden, deshalb wirken auf die Spulen Reaktionskräfte, die sie aus dem Magnetfeld zu drängen suchen. Solange alle Spulen kurzgeschlossen sind, wirken in der einen Hälfte die Kräfte linksdrehend, in der anderen Hälfte rechtsdrehend. Werden im Reaktionsrad nicht alle Spulen gleichzeitig kurzgeschlossen, so entsteht im Abtrieb ein Drehmoment. Die Kraft auf den Abtrieb ist dem Betrage nach gleich der Kraft auf den Antrieb. Im Gegensatz zur Kraft auf den Antrieb, ändert sich die Kraftrichtung wegen der selektiven Ansteuerung der Spulen, im Abtrieb nicht.

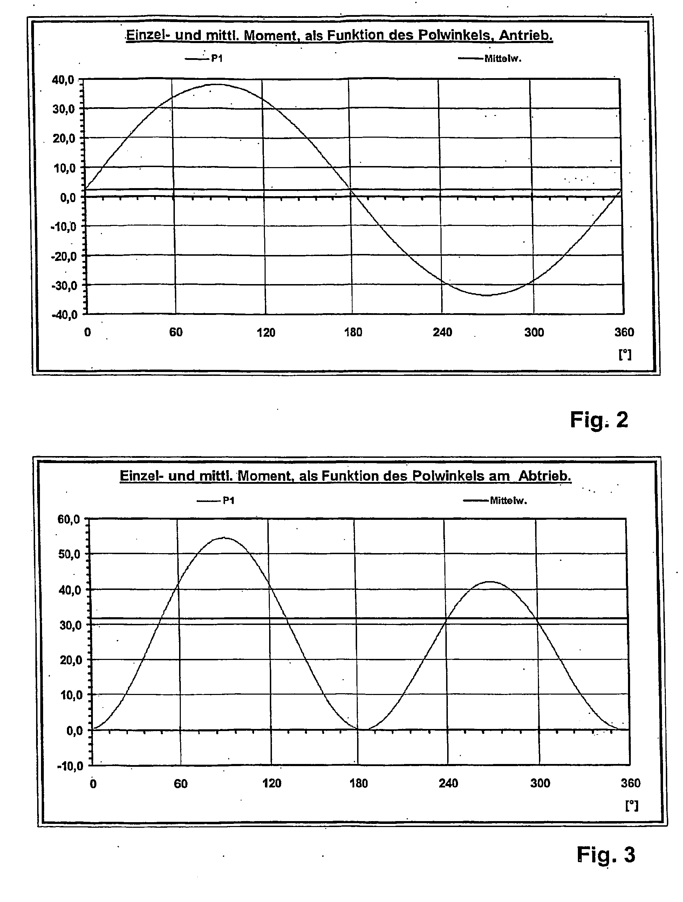

In Figur 2 ist der Momentenverlauf eines Poles im Antriebsrotor dargestellt, unter der idealisierten Annahme, dass der Spulenstrom im Abtrieb verlustfrei generiert werden könnte.

Es ist zu erkennen, dass beim Durchlaufen einer Polteilung ein beträchtliches, sinusförmiges Pendelmoment auftritt, das jedoch in seinem Mittelwert zu Null würde, wenn im System idealerweise keine Leistung verbraucht wird. Das System pendelt also immer zwischen generatorischem und motorischem Betrieb hin und her. In der Praxis muss jedoch der Antrieb die Systemverluste aufbringen. Deshalb ist der Momentenverlauf nicht symmetrisch. Der generatorische Bereich ist länger als der motorische Bereich. Im Mittel resultiert ein Drehmoment, das der Verlustleistung im System entspricht.

Figur 3 veranschaulicht den Momentenverlauf im Abtrieb. Im Abtrieb findet keine Momentenumkehr statt. Es ist jedoch erkennbar, dass die Momentenwellen in Antrieb und Abtrieb vergleichbar groß sind.

Beim Anfahren ist daher mit erheblichen Pendelmomenten im Antrieb und entsprechenden Rüttelmomenten im Abtrieb zu rechnen.

Beginnt sich der Abtrieb zu drehen, bewegen sich die kurzgeschlossenen Spulen der Kraftwirkung entsprechend aus dem Polfeld heraus. Die Polüberdeckung wird kleiner und damit auch der die Spulen durchsetzende magnetische Fluss. Im Zusammenhang des zeitlichen Ablaufs bedeutet dies eine Flussänderung - $d\Phi/dt$. Dadurch wird I und damit auch die Reaktionskraft kleiner. Der Antrieb muss schneller laufen, damit das $d\Phi/dt$ kompensiert wird.

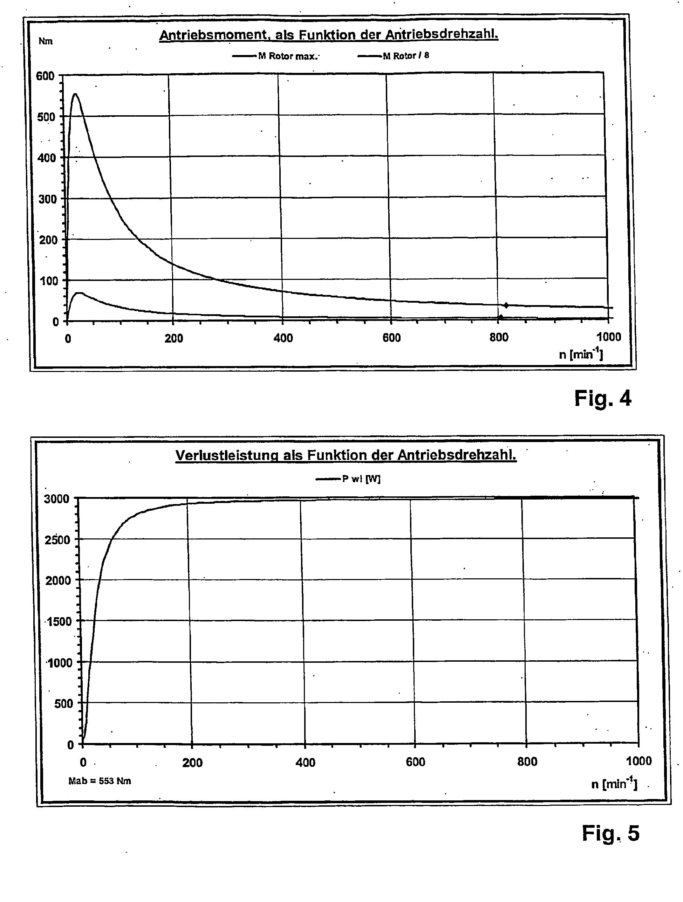

In Figur 4 ist der Momentenverlauf bei stillstehendem Abtrieb über der Antriebsdrehzahl dargestellt. Eine bei Maximallast und zum Vergleich für das Teillastverhalten bei ein achtel Last. Dieser Verlauf ist vergleichbar mit den Kipplinien von Asynchronmotoren.

Die Kurven stellen in Ihrem Verlauf rechts neben dem Maximalwert die Wandlungslinien dar. Alle Drehzahl- und Momentenpaare, die auf diesen Linien liegen, sind ineinander umwandelbar.

Bei 805 1/min liegt der Schnittpunkt mit der Wandlungslinie für Teillast (M Rotor/8) bei 4,4 Nm. Mit dieser Antriebsleistung, kann bei 24 1/min Abtriebsdrehzahl ein Abtriebsmoment von 69 Nm erreicht werden.

Bei einer Erhöhung der Motordrehzahl auf 827 1/min liegt der Schnittpunkt mit der Wandlungslinie für Volllast (M Rotormax) bei 33 Nm. Mit dieser Antriebsleistung kann bei 24 1/min Abtriebsdrehzahl ein Abtriebsmoment von 556 Nm erreicht werden.

Mit der Regelung der Erregung in den Spulen, bewirkt durch Verschiebung der Kommutationspunkte in Relation zu den Polen des Feldkonzentrators, kann jeder Punkt auf der Wandlungslinie von 0 bis $M_{max}$ angefahren werden.

Die Wandlungslinie für $M_{max}$ ist bezogen auf die Verluste der "worst case" für einen MDW. Die dabei entstehenden Verluste über der Antriebsdrehzahl sind in Fig. 5 aufgezeigt.

Entscheidend im Vergleich zu den Anfahrverlusten in einem hydraulischen Wandler sind die Verluste im MDW wesentlich kleiner. Figur 5 zeigt den Verlauf der Verluste bei blockiertem Abtrieb (Festbremsfunktion).

Die dargestellten Verluste entstehen zu 88 % im Reaktionsrad, durch Stromwärme in den Reaktionswicklungen und im Steller.

Nach Grundgleichung (1) ist

$M \sim 1$

und somit

$P_v \sim M^2$

Die Verlustleistung lässt sich somit für andere Momente berechnen nach:

$$Pv = (\ M / 580\ )^2 * 3000\ [W]$$

Da bei vergleichbarem Volumen zu einem hydraulischen Wandler die Verlustleistung beim Anfahren im MDW nur ca. 1/5 ist, sind alle Fahrprofile problemloser zu bewältigen, als bei einem Wandlergetriebe.

Es ist sogar denkbar, die gesamte Einheit mit Konvektionskühlung zu betreiben.

Damit erübrigen sich jegliche Präventionen gegen Störungen in einem Zwangskühlsystem. Effekte wie Nachheizen durch den Auspuff, sind konstruktions- und einbaubedingt und lassen sich wohl erst nach eingehenden "Package-Studien" definitiv beantworten. Es sei jedoch festgehalten, dass die thermisch kritischen Bauelemente wie Elektrolyt-Kondensatoren in der Steuerung, Magnete, Transistoren auch heute schon in Steuerungen vorhanden sind, die sich in Motornähe befinden, ohne dass unzumutbare Ausfälle zu verzeichnen wären.

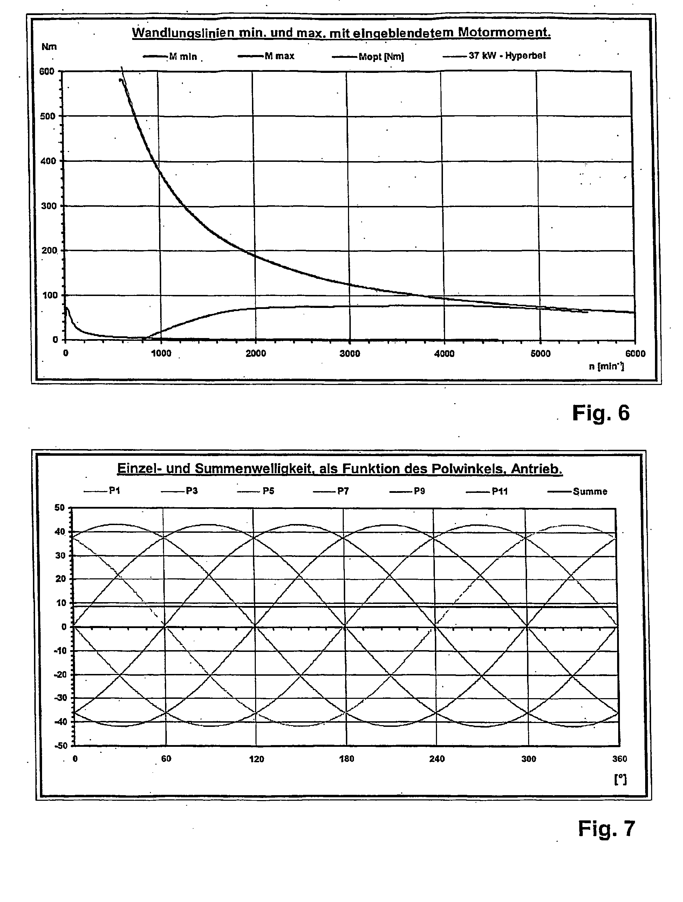

In Figur 6 sind die minimale und die maximale Wandlungslinie dargestellt, mit eingeblendeter Betriebsführungslinie für optimalen Verbrauch, und zum Vergleich die Leistungshyperbel 37 kW. Es ist erkennbar, dass die maximale Wandlungslinie faktisch mit der Leistungshyperbel zusammenfällt, die verbleibende Abweichung erklärt sich durch die unvermeidbaren Verluste.

Alle Wandlungslinien, vom Stillstand im Leerlauf, -der sich wie beim Handschaltgetriebe auch ohne Restschub darstellen lässt-, bis zur Maximallinie, sind Linien konstanter Leistung.

Beginnt sich der Abtrieb zu drehen, verschiebt sich die Wandlungslinie soweit nach rechts, bis die Grenzleistung der Antriebsmaschine, abzüglich der Eigenverluste des Wandlers erfüllt ist. Dabei verschiebt sich deren Schnittpunkt stetig nach rechts zu höheren Drehzahlen hin.

## Momentenripple und Geräusch

Wie bereits in den Figuren 2 und 3 erläutert sind die An- und Abtriebsmomente von starken Welligkeiten begleitet. Dies ist für die praktische Anwendung jedoch nicht tragbar.

Eine Lösung ergibt sich dadurch, dass die Polzahl von An- und Abtriebsrotor um 2 verschieden ist.

Der Antriebsrotor ist 22-polig und der Abtriebsrotor ist 24-polig. Durch diese Maßnahme treten die Momentenwellen nicht in allen Polen in der gleichen Phasenlage auf, sondern bezogen auf einen Umlauf um 1/13 versetzt. Daraus ergibt sich ein prinzipiell völlig rüttelfreier Momentenverlauf, sowohl im Antrieb, als auch im Stator. Die verbleibenden Geräusche sind hier wie dort dadurch zu begründen, dass an den Pol- und Nutzwischenräumen eine Diskontinuität der Luftspaltfelder unvermeidlich ist. Es ist somit zu erwarten, dass die Vibrationen und dadurch verursachte Geräusche denen üblicher Elektrömaschinen entsprechen.

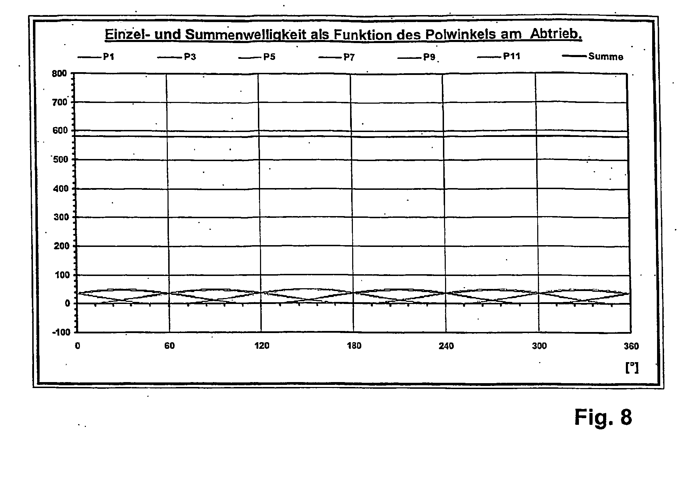

In den Figuren 7 und 8 sind für Antrieb und Abtrieb die phasenverschobenen Polmomente und deren Addition dargestellt. Der Übersichtlichkeit halber ist nur jeder zweite Kurvenzug dargestellt. Für das Summenmoment sind jedoch alle Polmomente mit deren Augenblickswerten berücksichtigt.

Eine Überlegung, den MDW auch als Kompensator für den Momentenripple des VM zu nutzen, könnte deshalb schwierig werden, da auf Grund des sich selbst kompensierenden MDW - Ripple, ein Gegenripple künstlich erzeugt werden muss.

Außerdem erscheint es sinnvoller, solche Schwingungen direkt an den Kurbeln, und nicht zentral am "Schwungrad" zu kompensieren, da auf diese Weise die Torsion der Kurbelwelle nicht vermieden sondern eher verstärkt wird.

## Erzeugung der Generatorerregung, Aktionsrad

In Bezug auf die Verluste ist es am sinnvollsten, das Aktionsrad permanent zu erregen.

Die übliche Verfahrensweise, auf die Polschuhe eines Aktionsrades gekrümmte Magnete aufzukleben, ist in dieser Anwendung ungeeignet. Um die gewünscht hohe Drehmomentdichte zu erreichen, ist der mit Kappenmagneten erreichbare Fluss zu klein.

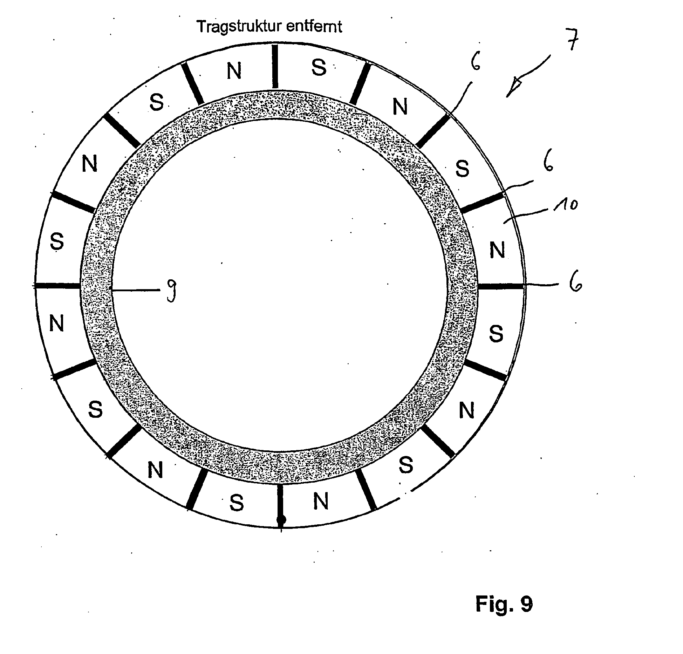

Es bietet sich an, gem. Figur 9 das Aktionsrad (Antriebsrotor 7) aus einzelnen Polschuhen 10 herzustellen. Zwischen den Polschuhen 10 entstehen dann radiale Schlitze, in die hochkant Plattenmagnete 6 eingeschoben werden.

Die Einzelpolschuhe 10 sind mechanisch nicht miteinander verbunden, deshalb werden an einem Innenrohr 3 seitliche Tragscheiben aus nichtmagnetischem Werkstoff mit den Polschuhen 10 fest vernietet.

Zur Vermeidung von tonnenförmigen Verformungen der Polschuhe 10 wird bei langen Läufern alle 40 mm eine gleichartige Zwischenscheibe mit eingenietet. Im POC-Aktionsrad mit einer Länge von 120 mm sind zwei Zwischenscheiben erforderlich.

In Figur 9 ist dargestellt, dass die Permanentmagnete 6 dünne scheibenförmige Körper sind, die radial auswärtsgerichtet sind. Zwischen diesen Magneten 6 sind magnetische Polschuhe 10 ausgebildet, die aus einem magnetisch leitfähigem Material bestehen. Ein solches Material kann z. B. ein Eisenmaterial oder ein geblechtes Eisenmaterial sein. Der Aktionsraddurchmesser ist auf 245 mm festgelegt.

Bei der POC-Maschine soll auf eine Feldverstellmöglichkeit im Rotor verzichtet werden, da die Anordnung dadurch erheblich einfacher werden kann. Die Leerlaufabsenkung wird über den Reaktionsradsteller bewirkt.

## Feldkonzentrator, Abtrieb

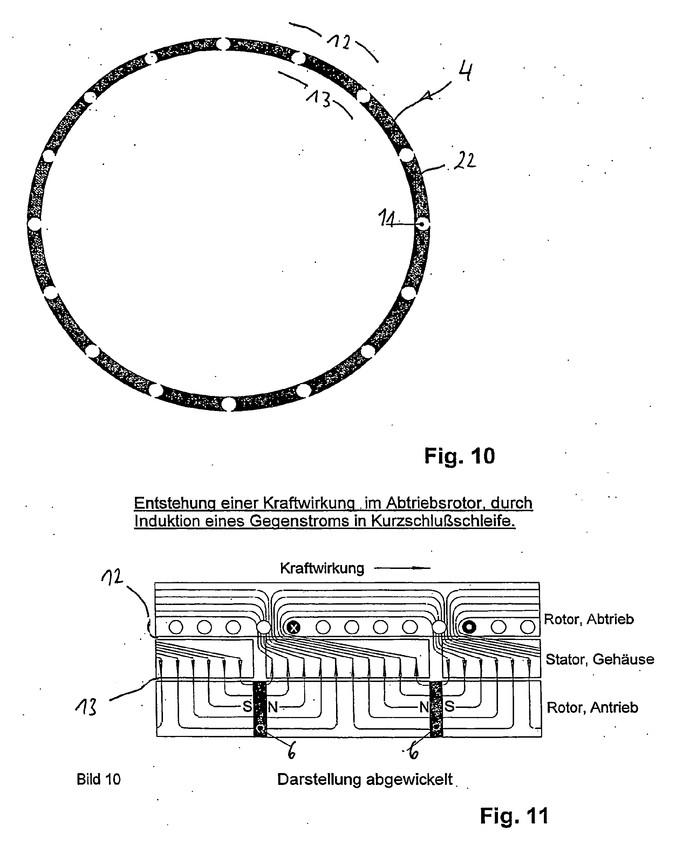

Figur 10 zeigt den Aufbau des Feldkonzentrators 4. Er ist für Generator und Motor gemeinsam und besteht aus geblechten Polen 22, die eine um 2 größere Anzahl der Polzahl aufweisen, als die des Aktionsrades. In der POC-Ausführung ist die Polzahl 24.

Der Feldkonzentrator besteht aus 24 Kreissegmenten, die wie beim Aktionsrad mit einer Tragstruktur aus nichtmagnetischem Werkstoff gefertigt sind.

Da im Feldkonzentrator 4 kein Rückenschluss vorhanden sein muss, ist die Polhöhe so zu gestalten, dass die Kräfte übertragbar sind. Die Segmente haben eine Dicke von 12,5 mm, so dass der Innendurchmesser des fertig montierten Rades 246 mm und der Außendurchmesser 271 mm ist.

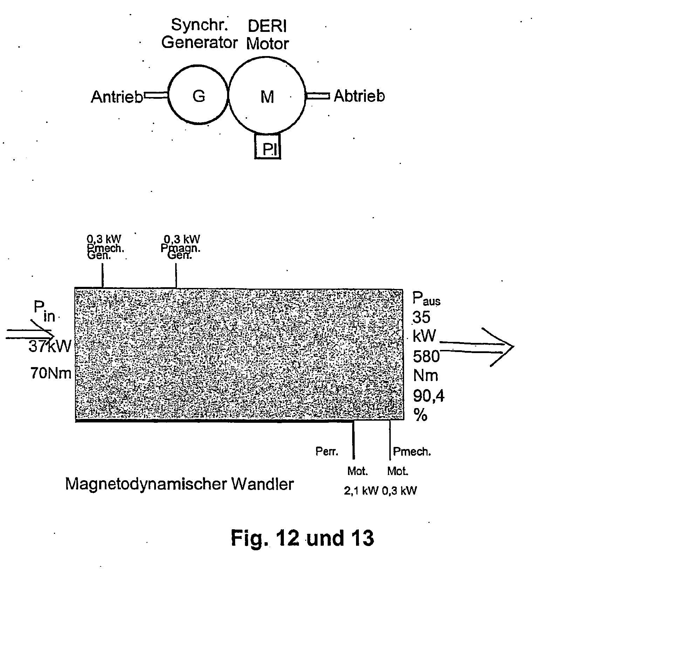

Wenn das Aktionsrad (Antriebsrotor 7) unter dem Reaktionsrad 2 gedreht wird, entsteht im Sekundärluftspalt 12 ein Wechselfeld mit einer Frequenz, die dem Produkt aus Antriebsdrehzahl je Sekunde und Polpaarzahl entspricht. Das Feld im Reaktionsrad (2) entspricht dann dem Feld im Sekundärluftspalt 12. Ein solches Einphasenwechselfeld ist Ausgangsbedingung für den in Figur 12 dargestellten DERI-Motor.

**Reaktionsrad, Stator**

In Figur 11 ist dargestellt, wie sich eine Kraft im Reaktionsrad ergibt, wenn das vom Reaktionsrad erzeugte Gegenfeld das Luftspaltfeld verdrängt und schwächt. In den Kurzschlussschleifen fließt ein Strom I, der wie B, von $\Theta$ des Aktionsrads abhängt und ein Drehmoment im Abtrieb bildet.

$$M \sim I * B \, \Theta \sim \Theta^2 \quad (4)$$

Bewegt sich das Reaktionsrad im Sinne des entwickelten Drehmoments, entspricht dies einer Änderung der Polüberschneidungsfläche, also einer zeitlichen Änderung des Gegenfeldes. Das bedeutet eine Spannung; vergleichbar der Gegen-EMK in normalen Maschinen. Nach Gl. (3) ergibt dies in Verbindung mit $\Theta$ eine Leistung.

Es wird magnetische Energie in mechanische Energie umgewandelt. Die durch die Feldverzerrung gem. Figur 11 resultierend Feldschwächung bedeutet, dass die damit verbundene Energiedifferenz vom Aktionsrad bereitgestellt werden muss, was einer Kraft im hemmenden Sinne auf das Aktionsrad entspricht.

Weil das Feld stets über die Feldkonzentratorpole verläuft, besteht eine Interaktion immer nur zwischen diesem und dem jeweiligen Rotor. Das bedeutet, dass sich in beiden Luftspalten unterschiedliche Kräfte aufbauen können. Einzige Bedingung ist die Erfüllung der Energiegleichung.

Wie bereits erläutert, bedarf es im Reaktionsrad einer Steuerung des sequentiellen Fortschaltens der kurzgeschlossenen Leiterschleifen.

$$T = 360/6 + tn \, ° \quad (5)$$

Der Steller ist modular und besteht pro Strang aus 4 Transistoren in H-Schaltung und einem Hallsensor, der die räumliche Stellung des Spulenstrangs zu den Feldkonzentratorpolen deteküert.

Diese Module müssen folgende Betriebsmodi zulassen:

Im Modus "Neutral" sind atte Leiterschteifen dauernd kurzgeschlossen, so dass in diesem Modus eine unabhängig von anderen Zuständen, momentenfreie Stellung erreicht wird.

Im Modus "Fahren" sind drei der sechs Stränge kurzgeschlossen. Die Auswahl der beiden Gruppen bestimmt die Fahrtrichtung. Die Verschiebung von Einschaltwinkel und Ausschaltwinkel bestimmt das Drehmoment.

Im Modus "Summe" werden die aktivierten Spulensträngen mit einem PWM-Signal so angesteuert, dass der Spulenstrom angehoben werden kann. Damit können die Funktionen "Starter" und "Booster" realisiert werden.

Im Modus "Differenz" werden die aktivierten Spulensträngen mit einem PWM-Signal so angesteuert, dass der Spulenstrom abgesenkt werden kann. Damit können die Funktionen "Generator" für Bordnetz oder "Nutzbremsung" realisiert werden.

Wird der Steller bei laufender Antriebsmaschine mit deren Frequenz synchronisiert, kann durch gleich- oder gegenphasige Spannung in der Wicklung Energie zugesetzt oder entnommen werden.

Durch diesen modularen Aufbau wird eine gewisse Redundanz erreicht, da bei Ausfall eines der Strangsysteme nur dieser eine Strang nicht mehr zum Drehmoment beiträgt, so dass 5/6 der Leistung noch zur Verfügung stehen.

**Serieller Magnetodynamischer Wandler**

In Figur 12 ist eine Wirkungskette mit dem zugehörigen Leistungsflussdiagramm nach Figur 13 für einen seriellen magnetodynamischen Wandler dargestellt.

Ohne Zweifel lässt sich erkennen, dass mit einem solchen System Wirkungsgrade erzielbar sind, die an diejenigen von Schaltgetrieben heranreichen. Begründet ist dies in erster Linie durch das Fehlen jeglicher Spulen und Steuerungen im Hauptstrompfad, im gegensatz zum EP 1 154 551 A2.

Außer für das Steuergerät für das MDW-Management ist keine externe Energiequelle erforderlich.

Des weiteren sind durch die erheblich geringeren Eisenmassen die Maschinen trotz serieller Betriebsart nicht größer als bei einem EIVT gleicher Durchsatzleistung.

Für ein Antriebsdrehmoment von 80 Nm und ein Abtriebsdrehmoment von 580 Nm, ließe sich eine solche Maschine mit den Maßen: D = 335 mm und L = 150 mm realisieren.

Dabei sind Luftspaltdurchmesser von 245 mm und 271 mm bei einer Eisenlänge von 110 mm erforderlich.

Die Anordnung kann erheblich kleiner werden, wenn im Abtrieb das Moment unter Drehzahlsteigerung verkleinert und anschließend in einem Getriebe wieder angehoben wird. Damit ist auch ein Wellenversatz ( Frontantrieb ) möglich.

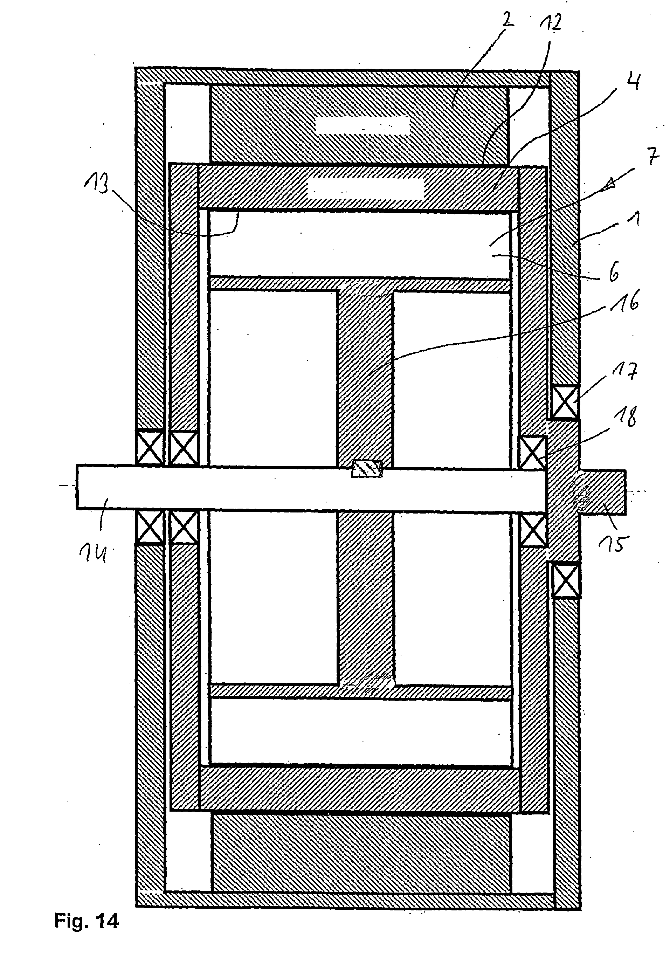

In Figur 14 ist ein prinzipieller Aufbau eines erfindungsgemäßen magnetodynamischen Getriebes dargestellt.

Unter Berücksichtigung des prinzipiellen Aufbaus in Figur 1 sind dort die einzelnen Teile in konstruktiver Ausführung dargestellt.

Eine Antriebswelle 14 ist drehfest mit einer Tragscheibe 16 verbunden, die ihrerseits drehfest mit dem Antriebsrotor 7 verbunden ist.

Der Antriebsrotor 7 trägt - gemäß der Darstellung in Figur 1 - am Umfang verteilt angeordnete Magnete 6, die in der Zeichnung nicht sichtbar sind, weil der Schnitt durch die geblechten Eisenpakete zwischen den Magneten 6 verläuft. Radial auswärts wird ein Primärluftspalt 13 zu einem äußeren umlaufenden Feldkonzentrator 4 gebildet. Dieser ist als topfförmiges Teil in Lagern 18 auf der Antriebswelle 14 gelagert.

Radial auswärts des Feldkonzentrators 4 ist der Sekundärluftspalt 12 angeordnet, dem sich radial auswärts der Stator 2 anschließt.

Der Stator 2 ist als topfförmiges Gehäuse mit einem Eisenteil ausgebildet. Er ist fest mit dem Gehäuse 1 verbunden, wobei die Abtriebswelle 15 über Lager 17 an dem feststehenden Gehäuse 1 gelagert ist.

## Steuerstrategie

Bei hydraulischen und handgeschalteten Getrieben ist es in der Regel ausreichend, mit dem Fahrpedal nur den VM (Verbrennungsmaschine) zu steuern.

Bei stufenlosen Wandlern ist dies nicht mehr sinnvoll, da nicht nur die Geschwindigkeitsanpassung, sondern auch die Verbrauchsoptimierung im Vordergrund stehen.

Wie vorher dargestellt, sind alle Wandlungslinien faktisch die zugehörigen Leistungshyperbeln. Wird der Fahrerwunsch zunächst in der MDW-Steuerung verarbeitet, wird die, der Fahrpedalstellung zugeordnete, Wandlungslinie durch den Steller angestrebt. Der Motorsteuerung wird dann der zum Motorkennfeld passende Sollwert vorgegeben, so dass sich ein Schnittpunkt des Motorbetriebspunkts mit der Wandlungslinie ergibt. Die sich dabei einstellende Übersetzung ist damit stets der Motorleistung äquivalent.

Bei Verzögerung kann ein Schubmoment vorgegeben werden, das rekuperativ die Energie ins Bordnetz transferiert. Der VM wird dadurch vom Schubbetrieb entlastet. Die Aufnahmefähigkeit eines 42 V Bordnetzes ist für die Schubleistung ausreichend. Bei 12 V müsste der Schubbetrieb entweder eingeschränkt werden oder kontrolliert an den VM abgeführt werden.

Umgekehrt kann die Abtriebsleistung im Boost-Betrieb, durch Einspeisung aus dem Bordnetz über die maximale VM-Leistung hinaus, zumindest im Rahmen der Ergiebigkeit des Netzes erhöht werden.

Im Normalbetrieb ist die Kommutation mit dem Abtrieb (in dem Fall dem Feldkozentrator) synchron. Durch gezielte Verstellung der Kommutation um den Wert $f/_{p1} + f/_{p2}$ kann der VM sowohl bei stehendem Fahrzeug, allerdings mit gesperrtem Abtrieb, als auch bei fahrendem Fahrzeug gestartet werden. Die erreichbaren Startmomente entsprechen dem Abtriebsmoment.

Die Abtriebsperrung bei stehendem Fahrzeug ist sinnvoll, da beim Startvorgang Rüttelmomente auf den Abtrieb übertragen werden, die aus dem Felddurchgriff ableitbar sind. Dreht sich der Abtrieb, werden diese durch die Massenträgheit geglättet. (Schubabschaltung).

## Fahrdynamik

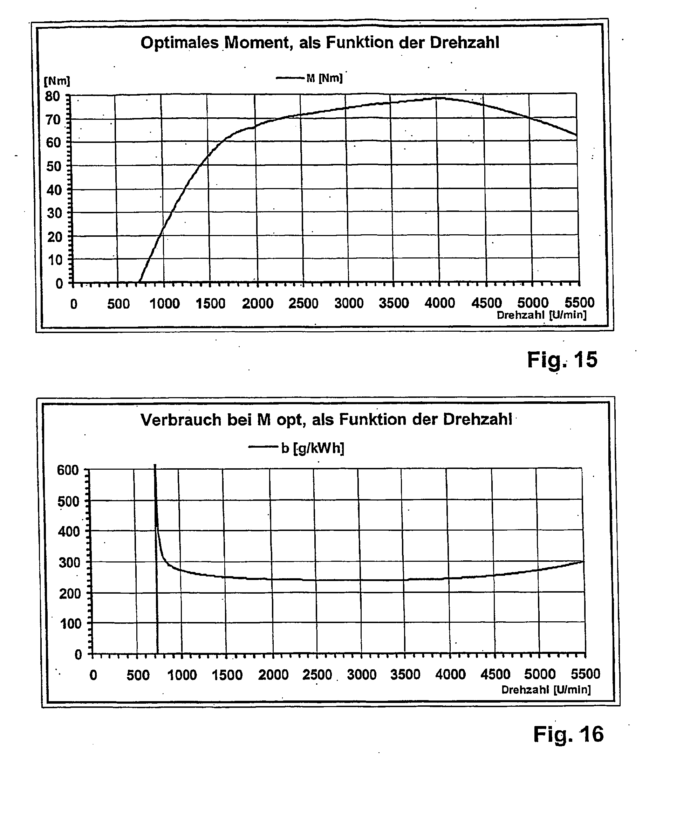

Für den POC wurde eine Simulation durchgeführt, um die Anfahrbeschleunigung und Elastizität zu demonstrieren. Dabei wurde ein Kleinwagen angenommen und ein Motorkennfeld eines 37 kW Motors. Aus diesem wurde die optimale Betriebsführungslinie extrahiert. In Figur 15 ist die Betriebsführungslinie und in Figur 16 der korrespondierende spezifische Verbrauch in g/kWh dargestellt.

Bei jeder Fahrbewegung adaptiert der MDW diese Betriebsführungslinie und stellt die für den augenblicklichen Fahrzustand, die dem Fahrerwunsch entsprechende Wandlung dar.

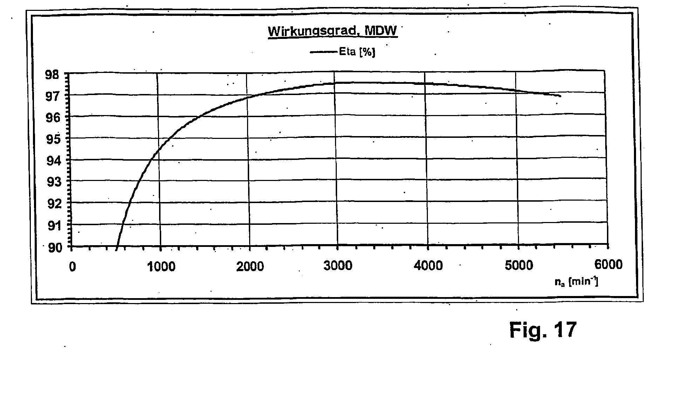

In Figur 17 ist der Wirkungsgrad bei Volllast über der Kardanwellendrehzahl in betriebswarmem Zustand errechnet.

Mit diesen Werten ist ein Vergleich mit einem Schaltgetriebe jederzeit möglich.

Eine Simulation der Beschleunigungszeiten ergibt Radzugkräfte von 7,9 kN im Anfahrbereich, dies ist vermutlich mehr, als von einem Kleinwagen überhaupt auf die Räder gebracht werden kann.

Die Adhäsionsgrenze wird erst bei einer Geschwindigkeit von 30,5 kmh unterschritten, vorher muss ein Schleuderschutz wirksam sein.

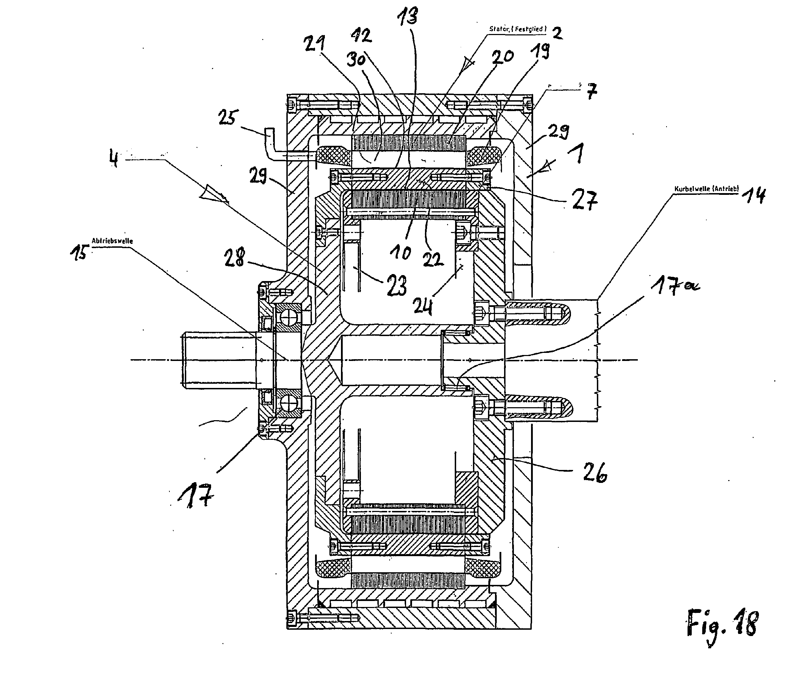

In Figur 18 sind weitere Einzelheiten eines magnetodynamischen Getriebes nach der Erfindung dargestellt. Es gelten die gleichen Erläuterungen zu den gleichen Bezugzeichen, wie sie vorstehend erwähnt wurden.

Die Antriebswelle 14 ist als Kurbelwelle ausgebildet, deren Stumpf über Schrauben drehfest mit einem Flanschteil 26 verbunden ist, welches seinerseits den Antriebsrotor 7 trägt.

An der Innenseite des Lagerflansches sind hierbei einander gegenüberliegende Halteringe 23, 24 angeschraubt, welche radial auswärts die geblechten und genieteten magnetischen Polschuhe 10 tragen. Zwischen diesen Polschuhen 10 sind gemäß der Figur 1 die Permanentmagnete 6 eingebettet und im Schnitt der Figur 18 nicht dargestellt.

Radial auswärts des Antriebsrotors 7 schließt sich der Primärluftspalt 13 an, und gegenüber diesem liegend ist der Feldkonzentrator 4 angeordnet. Dieser besteht im Wesentlichen aus einem hülsenförmigen Ringteil 22 aus Eisen, welches an einem Stützring 27 befestigt ist.

Der Feldkonzentrator 4 ist mit einer Abtriebsflanschwelle 28 verbunden, welche ein einziges Teil mit der Abtriebswelle 15 bildet. Diese ist über die Lager 17 in dem Gehäuse 1 drehbar gelagert. Das Gehäuse 1 wird hierbei am Motorflansch drehfest befestigt.

Radial auswärts des Feldkonzentrators 4 ist der Sekundärluftspalt 12 angeordnet, an den radial auswärts sich wiederum das Blechpaket des Stators 2 anschließt.

Das Blechpaket ist mit 20 bezeichnet und trägt eine radial ausliegende Kühlbüchse 21 mit entsprechenden Kühlkanälen. Diese Kühlkanäle sind von einem Kühlmedium durchflossen.

Der Stator 2 ist hierbei zwischen Lagerscheiben aufgenommen und mittels axial gerichteter Schrauben zwischen den Lagerdeckeln 29 verschraubt.

Zur Klarstellung wird noch angefügt, dass das Lager 17 auf der linken Seite die Lagerung der Abtriebswelle am Gehäuse 1 bildet, während das Lager 17a auf der rechten Seite die Lagerung der Abtriebsflanschwelle 28 auf der Kurbelwelle (Antriebswelle 14) bildet.

Der Stator 2 weist einen Wickelkopf 19 auf, der eine Wicklung beaufschlagt, die in der Nut 30 des Blechpaketes 20 sitzt.

Das Übersetzungsverhältnis zwischen der Antriebswelle 14 und der Abtriebswelle 15 wird nun dergestalt geregelt, dass die Drehzahl der Abtriebswelle 15 durch einen entsprechenden Drehsensor erfasst wird, der z. B. an der Abtriebsflanschwelle 28 angeordnet ist, über eine Elektronik, die mit den Wicklungsanschlüssen am Wicklungsanschluss 25 verbunden ist, werden nun Kurzschlüsse in den einzelnen Wicklungen des Wcklungskopfes entsprechend dem gewünschten Übersetzungsverhältnis zwischen dem Antrieb und dem Abtrieb eingeleitet.

Es ist nicht nur eine Unter- oder Übersetzung mit dem erfindungsgemäßen Getriebe möglich, sondern auch eine Richtungsumkehr. Es kann der Feldwinkel zwischen dem Feldkonzentrator und dem Stator voreilend oder nacheilend eingestellt werden, was dementsprechend mit einer Richtungsumkehr verbunden ist.

Wichtig ist also, dass man mit dem erfindungsgemäßen Getriebe vorwärts und rückwärts fahren kann, was mit herkömmlichen Getrieben nicht möglich ist.

In einer Weiterbildung der vorliegenden Erfindung ist es vorgesehen, dass der in den Kurzschlusswicklungen induzierte Strom nun genutzt werden kann, um beispielsweise eine Batterie zu laden. Das erfindungsgemäße Getriebe kann dementsprechend auch als Generator arbeiten.

Aufgrund des hohen Drehmomentes, welches mit diesem Getriebe erzeugt werden kann, kann dieses Getriebe auch als Anlassermotor für die Verbrennungskraftmaschine verwendet werden. Außerdem ersetzt das erfindungsgemäße magnetodynamische Getriebe auch ein herkömmliches Schwungrad im Kraftfahrzeug.

Durch die Steuerungselektronik kann eine entsprechende Fahrstrategie vorgegeben werden, die dafür sorgt, dass der antreibende Verbrennungsmotor stets in einem Verbrauchsoptimum arbeitet.

Ebenso kann im Bremsbetrieb des Kraftfahrzeuges die Bremsenergie über das erfindungsgemäße Getriebe in elektrischen Strom zurückgewonnen werden.

Durch eine Zuspeisung aus der Batterie kann bei Beschleunigungsvorgängen des Verbrennungsmotors ein zusätzliches Drehmoment von Seiten des magnetodynamischen Getriebes auf den Abtrieb des Verbrennungsmotors aufgebracht werden. Dies entspricht einer Boost-Funktion.

**Zeichnungslegende**

1    Gehäuse
2    Stator, Reaktionsrad, Abtriebsrotor

| 3 | Innenrohr |
|---|---|
| 4 | Feldkonzentrator |
| 5 | Wicklungsnuten |
| 6 | Magnet |
| 7 | Antriebsrotor (Aktionsrad) |
| 8 | |
| 9 | Stäbe |
| 10 | magnetische Polschuhe |
| 11 | Polspalt |
| 12 | Sekundärluftspalt |
| 13 | Primärluftspalt |
| 14 | Antriebswelle |
| 15 | Abtriebswelle |
| 16 | Tragscheibe |
| 17 | Lager 17a |
| 18 | Lager |
| 19 | Wickelkopf (Stator) |
| 20 | Blechpaket |
| 21 | Kühlbüchse |
| 22 | Ringteil (Eisen) |
| 23 | Haltering |
| 24 | Haltering |
| 25 | Wicklungsanschluss |
| 26 | Flanschteil |
| 27 | Stützring |
| 28 | Abtriebsflanschwelle |
| 29 | Lagendeckel |
| 30 | Nut |

**Patentansprüche**

**1.** Stufenlos schaltbares, magnetodynamisches Getriebe mit einem von einer Antriebsquelle drehangetriebenen Aktionsrad (7), das mit gleichmäßig am Umfang verteilt angeordneten Magneten (6) bestückt ist und bei Drehung ein vielpoliges, sich mitdrehendes Magnetfeld im umgebenden Raum ausbildet, das radial auswärts durch einen primären Luftspalt (13) von einem koaxialen Feldkonzentrator (4) umgeben ist, der magnetisch leitfähige Polschuhe ausbildet, welcher über einen sekundären Luftspalt (12) getrennt von einem koaxialen Reaktionsrad (2) umgeben ist, dessen Nuten (5) Leiterschleifen tragen, die im Betrieb sequentiell kurzgeschlossen werden.

**2.** Getriebe nach Anspruch 1, **dadurch gekennzeichnet, dass** die Leiterschleifen des Reaktionsrades (2) gruppenweise sequentiell kurzgeschlossen werden und die Anzahl der zusammen geschalteten Gruppen von Leiterschleifen der Anzahl der Polschuhe des Aktionsrades (7) entspricht.

**3.** Getriebe nach Anspruch 1 oder 2, **dadurch gekennzeichnet, dass** die Polzahl von Aktionsrad (7) und Reaktionsrad (Stator 2) um 2 verschieden ist.

**4.** Getriebe nach Anspruch 3, **dadurch gekennzeichnet, dass** die Polzahl des Aktionsrades (7) 22-polig und die des Reaktionsrades (Stator 2) 24-polig ist.

**5.** Getriebe nach einem der Ansprüche 1 bis 4, **dadurch gekennzeichnet, dass** der Feldkonzentrator (4) als Polrad ausgebildet ist und die einzelnen Polschuhe aus radial gerichteten Permanentmagneten (6) bestehen, zwischen denen gleichmäßig am Umfang verteilt ein magnetisch leitfähiges Material angeordnet ist.

**6.** Getriebe nach einem der Ansprüche 1 bis 5, dgkz., daß der in den kurzgeschlossen Leiterschleifen induzierte Strom zur Ladung einer Batterie genutzt ist, wobei das Getriebe als Generator arbeitet.

**7.** Getriebe nach einem der Ansprüche 1 bis ,6, **dadurch gekennzeichnet, dass** im Reaktionsrad (2) einer Steuerung des sequentiellen Fortschaltens der kurzgeschlossenen Leiterschleifen nach der Formel

$$T = 360/6 + tn \,\,° \qquad (5)$$

stattfindet und dass der Steller modular ausgebildet ist und pro Strang aus 4 Transistoren in H-Schaltung und einem Hallsensor besteht, der die räumliche Stellung des Spulenstrangs zu den Feldkonzentratorpolen detektiert.

**8.** Verfahren zum Betrieb eines magnetodynamischen Getriebes nach einem der Ansprüche 1 bis 7, **dadurch gekennzeichnet, dass** der Wandler mit mindestens einem oder mehreren der folgenden Betriebsmodi arbeitet:

8.1 Im Modus "Neutral" sind alle Leiterschleifen dauernd kurzgeschlossen, so dass in diesem Modus eine unabhängig von anderen Zuständen, momentenfreie Stellung erreicht wird.
8.2 Im Modus "Fahren" sind drei der sechs Stränge kurzgeschlossen. Die Auswahl der beiden Gruppen bestimmt die Fahrtrichtung. Die Verschiebung von Einschaltwinkel und Ausschaltwinkel bestimmt das Drehmoment.

**9.** Verfahren zum Betrieb eines magnetodynamischen Getriebes nach Anspruch 6, dgkz., ist.

9.1 Im Modus "Summe" die aktivierten Spulenstränge mit einem PWM-Signal so angesteuert werden, dass der Spulenstrom angehoben werden kann. Damit können die Funktionen "Starter" und "Booster" realisiert werden.
9.2 Im Modus "Differenz" die aktivierten Spulenstränge mit einem PWM-Signal so angesteuert werden, dass der Spulenstrom abgesenkt werden kann. Damit können die Funktionen "Generator" für Bordnetz oder "Nutzbremsung" realisiert werden.

**10.** Verfahren nach Anspruch 8 oder 9, **dadurch gekennzeichnet, dass** der Steller bei laufender Antriebsmaschine mit deren Frequenz synchronisiert wird und hierdurch bei gleich- oder gegenphasiger Spannung in der Wicklung Energie zugesetzt oder entnommen wird.

**Claims**

**1.** Infinitely variable magnetodynamic gearbox with an impulse wheel (7) which is driven in rotation by a drive source, is fitted with magnets (6) uniformly distributed around its circumference, and when rotating sets up in the surrounding space a co-rotating multipolar magnetic field which is surrounded radially outwards by a primary air-gap (13) of a coaxial field concentrator (4) which forms magnetically conductive pole-shoes and is separated by a secondary air-gap (12) from a coaxial reaction wheel (2) whose slots (5) carry conductor loops which are sequentially short-circuited during operation.

**2.** Gearbox according to Claim 1, **characterized in that** the conductor loops of the reaction wheel (2) are sequentially short-circuited in groups, and the number of coupled groups of conductor loops is equal to the number of pole-shoes of the impulse wheel (7).

**3.** Gearbox according to Claim 1 or Claim 2, **characterized in that** the numbers of poles of the impulse wheel (7) and reaction wheel (stator 2) differ by 2.

**4.** Gearbox according to Claim 3, **characterized in that** the number of poles of the impulse wheel (7) is 22, and that of the reaction wheel (stator 2) is 24.

**5.** Gearbox according to any one of Claims 1 to 4, **characterized in that** the field concentrator (4) is configured as a magnet wheel and the individual pole-shoes consist of radially orientated permanent magnets (6) between which a magnetically conductive material is arranged, uniformly distributed around the circumference.

**6.** Gearbox according to any one of Claims 1 to 5, **characterized in that** the current induced in the short-circuited conductor loops is utilized to charge a battery, with the gearbox functioning as a generator.

**7.** Gearbox according to any one of Claims 1 to 6, **characterized in that** control of the sequential stepping of the short-circuited conductor loops in the reaction wheel (2) is applied in accordance with the formula

$$T = 360/6 + tn °$$

and **in that** the control element has a modular configuration and consists, in each winding, of four H-connected transistors and a Hall probe which detects the spatial position of the coil winding in relation to the field concentrator poles

8. Method of operating a magnetodynamic gearbox according to any one of Claims 1 to 7, **characterized in that** the converter functions in at least one or more of the following operating modes:

   8.1 In "Neutral" mode all conductor loops are permanently short-circuited, so that a torque-free setting is obtained in this mode, independently of other states.
   8.2 In "Drive" mode three of the six windings are short-circuited. The selection of the two groups determines the direction of travel. The shift in cut-in angle and cut-out angle determines the torque.

9. Method of operating a magnetodynamic gearbox according to Claim 6, **characterized in that**:

   9.1 In "Addition" mode the activated coil windings are triggered by a PWM signal so that the coil current can be raised. "Starter" and "Booster" functions can therefore be performed.
   9.2 In "Subtraction" mode the activated coil windings are triggered by a PWM signal so that the coil current can be lowered. "Generator" (for the vehicle power supply) or "Regenerative braking" functions can therefore be performed.

10. Method according to Claim 8 or Claim 9, **characterized in that** when the engine is running the control element is synchronized with its frequency, thereby adding or subtracting power with cophasal or antiphasal voltage in the coil.


## Revendications

1. Transmission magnétodynamique à réglage continu, comportant une roue d'action (7) qui est entraînée en rotation par une source d'entraînement, qui est garnie d'aimants (6) répartis régulièrement sur sa circonférence et qui forme dans l'espace environnant, lorsqu'elle tourne, un champ magnétique multipolaire qui tourne lui aussi et qui est entouré radialement vers l'extérieur, grâce à un entrefer primaire (13), par un concentrateur de champ coaxial (4) qui forme des épanouissements polaires à conductibilité magnétique et qui est entouré, en étant séparé par un entrefer secondaire (12), par une roue de réaction coaxiale (2) dont les rainures (5) portent des boucles conductrices court-circuitées successivement, en fonctionnement.

2. Transmission selon la revendication 1, **caractérisée en ce que** les boucles conductrices de la roue de réaction (2) sont court-circuitées successivement par groupes et le nombre de groupes de boucles conductrices qui sont interconnectés correspond au nombre d'épanouissements polaires de la roue d'action (7).

3. Transmission selon la revendication 1 ou 2, **caractérisée en ce que** la différence entre le nombre de pôles de la roue d'action (7) et celui de la roue de réaction (stator (2) est égal à 2.

4. Transmission selon la revendication 3, **caractérisée en ce que** la roue d'action (7) a 22 pôles et la roue de réaction (stator 2) a 24 pôles.

5. Transmission selon l'une des revendications 1 à 4, **caractérisée en ce que** le concentrateur de champ (4) est conçu comme une roue polaire et les épanouissements polaires individuels se composent d'aimants permanents (6), dirigés radialement, entre lesquels est disposé un matériau à conductibilité magnétique réparti régulièrement sur la circonférence.

6. Transmission selon l'une des revendications 1 à 5, **caractérisée en ce que** le courant induit dans les boucles conductrices court-circuitées est utilisé pour charger une batterie, la transmission fonctionnant comme un générateur.

7. Transmission selon l'une des revendications 1 à 6, **caractérisée en ce que** dans la roue de réaction (2), une commande de la commutation successive des boucles conductrices court-circuitées a lieu selon la formule

$$T = 360/6 + tn° \qquad (5)$$

et **en ce que** le régulateur est modulaire et se compose pour chaque branche de 4 transistors en circuit H et d'un capteur de Hall qui détecte la position dans l'espace de la branche de bobine par rapport aux pôles de concentrateur de champ.

8. Procédé pour faire fonctionner une transmission magnétodynamique selon l'une des revendications 1 à 7, **caractérisé en ce que** le convertisseur fonctionne avec l'un au moins des modes de fonctionnement suivants :

8.1 en mode "neutre", toutes les boucles conductrices sont court-circuitées en permanence, de sorte que dans ce mode, on obtient une position sans moment indépendamment d'autres états ;

8.2 en mode "fonctionnement", trois des six branches sont court-circuitées. Le choix des deux groupes définit le sens de fonctionnement. Le décalage de l'angle de mise en marche et de l'angle d'arrêt définit le couple de rotation.

9. Procédé pour faire fonctionner une transmission magnétodynamique selon la revendication 6, **caractérisé en ce que**

9.1 en mode "somme", les branches de bobine activées sont commandées avec un signal PWM (modulation de largeur d'impulsion) de telle sorte que le courant de bobine peut être augmenté. Ainsi, les fonctions "démarreur" et"amplificateur" peuvent être réalisées.

9.2 en mode "différence", les branches de bobine activées sont commandées avec un signal PWM de telle sorte que le courant de bobine peut être réduit. Ainsi, les fonctions "générateur" pour le réseau de bord ou "freinage par récupération" peuvent être réalisées.

10. Procédé selon la revendication 8 ou 9, **caractérisé en ce que** lorsque le moteur d'entraînement tourne, le régulateur est synchronisé avec la fréquence dudit moteur, et en présence d'une tension de phases identiques ou opposées dans l'enroulement, de l'énergie est ainsi ajoutée ou enlevée.

Fig. 1

Fe

Al

**Einzel- und mittl. Moment, als Funktion des Polwinkels, Antrieb.**

——P1    ——Mittelw.

**Fig. 2**

**Einzel- und mittl. Moment, als Funktion des Polwinkels am Abtrieb.**

——P1    ——Mittelw.

**Fig. 3**

## Antriebsmoment, als Funktion der Antriebsdrehzahl.

—M Rotor max.·    —M Rotor / 8

**Fig. 4**

## Verlustleistung als Funktion der Antriebsdrehzahl.

—P wl [W]

Mab = 553 Nm

**Fig. 5**

## Wandlungslinien min. und max. mit eingeblendetem Motormoment.

Nm

——M min ——M max ——Mopt [Nm] ——37 kW - Hyperbel

n [min⁻¹]

**Fig. 6**

## Einzel- und Summenwelligkeit, als Funktion des Polwinkels, Antrieb.

——P1 ——P3 ——P5 ——P7 ——P9 ——P11 ——Summe

[°]

**Fig. 7**

**Einzel- und Summenwelligkeit als Funktion des Polwinkels am Abtrieb.**

Fig. 8

Fig. 9

**Fig. 10**

Entstehung einer Kraftwirkung im Abtriebsrotor, durch
Induktion eines Gegenstroms in Kurzschlußschleife.

Kraftwirkung ——→

Rotor, Abtrieb

Stator, Gehäuse

Rotor, Antrieb

Bild 10                    Darstellung abgewickelt

**Fig. 11**

Synchr. DERI
Generator Motor

Antrieb ⊏ ( G ) ( M ) ⊐ Abtrieb

PI

0,3 kW          0,3 kW
Pmech.          Pmagn.
Gen.            Gen.

$P_{in}$

$P_{aus}$
35
kW
580
Nm
90,4
%

37kW

70Nm

Perr.          Pmech.

Mot.           Mot.

Magnetodynamischer Wandler          2,1 kW 0,3 kW

# Fig. 12 und 13

Fig. 14

EP 1 685 642 B1

**Fig. 15**

**Fig. 16**

**Wirkungsgrad, MDW**

Fig. 17

Fig. 18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19604710 A1
- EP 1154551 A2

**In der Beschreibung aufgeführte Nicht-Patentliteratur**

- **PETER GRAF VON INGELHEIM.** Mechanik ade. *Das Industriemagazin,* 42-45